# EUROPÄISCHE PATENTSCHRIFT

(11) **EP 0 400 265 B1**
(45) Veröffentlichungstag und Bekanntmachung des Hinweises auf die Patenterteilung: **27.07.1994**
(21) Anmeldenummer: 90101773.1
(22) Anmeldetag: 30.01.1990
(51) Int. Cl.: F16H 25/22, B29C 33/42

(54) **Verfahren zur Herstellung einer Kugelumlenkungseinrichtung an der Mutter einer Kugelgewindespindel und Kugelgewindespindel**
Method for manufacturing a ball deflector guide for a ball nut and a ball screw device
Procédé pour fabriquer le dispositif de transfert des billes d'un écrou à circulation de billes et vérin à vis à billes.

(30) Priorität: 30.05.1989 DE 3917578
(43) Veröffentlichungstag der Anmeldung: 05.12.1990
(73) Patentinhaber: Neff Antriebstechnik Automation GmbH, D-71111 Waldenbuch (DE)
(72) Erfinder: Hauser, Karl-Heinz, D-7049 Steinenbronn (DE)
(74) Vertreter: Rüger, Rudolf, Dr.-Ing.

(56) Entgegenhaltungen:
- EP-A- 0 198 750
- US-A- 2 855 792
- US-A- 4 342 235

## Beschreibung

Die Erfindung betrifft ein Verfahren zur Herstellung einer Kugelumkenkungseinrichtung an der Mutter einer Kugelgewindespindel mit den Merkmalen des Oberbegriffes des Patentanspruches 1.

Außerdem bezieht sich die Erfindung auf eine Kugelgewindespindel mit einer Spindel und einer auf dieser mittels Kugeln gelagerten Mutter mit den Merkmalen des Oberbegriffes des Patentanspruches 14.

Bei einer aus der DE-C-23 55 844 bekannten Kugelgewindespindel ist das aus Kunststoffmaterial bestehende Umlenkstück, das einen im wesentlichen U-förmigen Umlenkkanal enthalt, der zwei benachbarte Schraubennuten der Mutter miteinander verbindet, von innen her in eine durchgehende, zylindrische Bohrung der Wandung der Mutter eingesetzt. Zu seiner lagerichtigen Fixierung und Positionierung ist es mit einem Vorsprung versehen, der sich in eine entsprechende Ausnehmung der Spindelmutter einlegt. Um einen geräuscharmen Betrieb der Kugelgewindespindel sicherzustellen, muß Vorsorge getroffen werden, daß weder in dem Umlenkkanal selbst noch im Bereiche dessen Mündung in die Schraubennuten der Mutter und der Spindel abrupte Übergänge oder sonstige Unregelmäßigkeiten vorhanden sind, die den ruhigen Kugellauf beeinträchtigen. Dies bedeutet, daß die vorgefertigten Umlenkstücke wegen der Fertigungstoleranzen an die Bohrung in der Wandung der Mutter angepaßt und zu der Spindel justiert werden müssen und außerdem bei der Montage eine Nachbearbeitung, bspw. durch Schleifen, erforderlich wird.

Grundsätzlich Gleiches gilt auch für solche Kugelgewindespindeln, bei denen die in entsprechende Öffnungen in der Wandung der Mutter eingesetzten Kugelumlenkstücke lediglich Teile des Kugelumlenkkanales begrenzen, welcher sich durch eine Bohrung in der Wandung der Mutter fortsetzt (vergl. bspw. DE-A-1 923 742). Hierbei muß noch zusätzlich darauf geachtet werden, daß an der Anschlußstelle der Umlenkstücke an die Umlenkkanalbohrung in der Wandung der Mutter keine unerwünschten, abrupten Übergänge vorhanden sind, die ebenfalls zu Geräuschbildung und vorzeitigem Verschleiß führen.

Mit aus Kunststoff vorgefertigten Kugelumlenkstücken ist auch die Mutter einer aus der US-A-2 855 792 bekannten Kugelgewindespindel versehen, deren Mutter zwei im axialen Abstand voneinander angeordnete Öffnungen aufweist, die durch ein erstes Umlenkkanalteil miteinander verbunden sind, das sich über mehrere Gewindegänge der Mutter hinweg erstreckt. Dabei sind die in den beiden Öffnungen zugeordneten Kugelumlenkstücke an einem einheitlichen Kunststofformteil ausgebildet, das im montierten Zustand mit einem Steg eine zwischen den beiden Öffnungen verlaufende, in die Wandung der Mutter eingearbeitete, rinnenartige Vertiefung abdeckt und zu dem ersten Umlenkkanalteil ergänzt. Dieses Formteil ist mit der Außenwandung der Mutter verschraubt.

Eine einfachere rationellere Herstellung der Kugelumlenkeinrichtung gestattet demgegenüber ein aus der US-A-4 342 235 bekanntes Verfahren, von dem die Erfindung ausgeht und bei dem das Kugelumlenkstück durch Ausgießen einer durch ein Formteil verschlossenen Öffnung in der Mutterwandung mit Kunststoffmaterial unmittelbar an der Mutter angegossen wird. Dabei wird ein einstückiges Formteil verwendet, das zum einem mit einem im wesentlichen mit dem Gewindeprofil der Mutter korrespondierenden Gegenprofil versehen ist und zum anderen ein den Formkern für das Umlenkkanalteil bildendes Teil aufweist. Um nach dem Aushärten des Kunststoffes das einstückige Formteil wieder aus der Mutter entnehmen zu können, darf es keine Hinterschneidungen aufweisen, was u.a. bedeutet, daß der durch das Umlenkstück verlaufende Kanal die darin geführten Kugeln lediglich über einen Teil ihres Umfanges umschließend ausgeformt werden kann. Davon abgesehen ist dieses Verfahren nicht ohne weiteres für die Herstellung der Kugelumlaufstücke bei Spindelmutterkonstruktionen geeignet, bei denen sich der Kugelrückführkanal durch die Spindelmutter selbst über mehrere Gewindegänge hinweg erstreckt. Dies gilt auch für ein anderes, aus der EP-A-0 198 750 bekanntes Verfahren zur Herstellung des Kugelumlenkstückes einer Kugelgewindespindel, bei dem ein aus einem plastischen Material, beispielsweise weichem Kupfer oder Zinn, bestehender Formkern verwendet wird, der auf der Spindel zwei benachbarte Kugellaufbahnen miteinander verbindend angeordnet ist, um zunächst eine Matrize für die Erzeugung des Umlenkstückes herzustellen.

Aufgabe der Erfindung ist es, einen Weg zu weisen, der es erlaubt, die Mutter von Kugelgewindespindeln auf einfache, rationelle Weise mit Kugelumlenkeinrichtungen auszurüsten, die sich durch eine besonders ruhige und verschleißarme Kugelführung auszeichnen, wobei gleichzeitig keine Beschränkungen hinsichtlich der Kugelumlenk- oder -rückführkanalabschnitte bestehen.

Zur Lösung dieser Aufgabe wird erfindungsgemäß nach den Merkmalen des kennzeichnenden Teils des Patentanspruches 1 vorgegangen.

Unter "Ausgießen" ist hierbei nicht nur das normale (drucklose) Gießverfahren,sondern auch jedes Druckgußverfahren ("Spritzen") verstanden.

Das das Gegenprofil der Mutter tragende Formteil weist mit Vorteil wenigstens eine der Anlaufschulter entsprechende Formhöhlung auf, so daß diese unmittelbar beim Gießvorgang mit erzeugt wird. Sie kann sich dabei ein Stück in die zugeordnete Schraubennut der Mutter hinein erstrecken, um eine stabile, präzise Abstützung der Kugeln bei deren Auslauf aus der Schraubennut zu gewährleisten.

Als aushärtbares Gießmaterial kann ein Kunststoff verwendet werden, der gegebenenfalls auch warmhärtend sein kann, doch ist auch die Verwendung eines Metalles oder einer Metallegierung, bspw. Aluminium, für diesen Zweck denkbar.

Der dem Umlenkkanal entsprechende Formkern besteht in einer bevorzugten Ausführungsform aus einem elastisch biegsamen Material, bspw. einem entsprechend abgeschnittenen Stück eines handelsüblichen O-Ringes, wie er für Dichtungszwecke gebräuchlich ist. Ein solcher gummielastischer, kreiszylindrischer Formkern ergibt nach dem Aushärten des Formstückes automatisch eine ideale Umlenkkurve für die Kugeln, weil er sich aufgrund seiner Eigenelastizität bei der Montage von selbst eine Stellung sucht, in der seine neutrale Faser dem besten Weg folgt.

Grundsätzlich ist es natürlich auch möglich, einen vorgeformten Formkern zu verwenden oder auch einen Formkern, der aus einem aus dem ausgehärteten Umlenkstück ausschmelz- oder -lösbaren Material besteht.

Dadurch, daß das Umlenkstück an Ort und Stelle in der Mutter selbst gegossen und damit an diese praktisch angeformt wird, wobei das fließfähige Gießmaterial auch kleinste Zwischenräume in der von dem Formteil der Mutter und dem Formkern begrenzten Formhöhlung ausfüllt, ist gewährleistet, daß im Bereiche des Kugelumlenkkanales von vornherein keinerlei störende Übergänge vorhanden sind, sondern sich die Wandung des Kugelumlenkkanals über ihre gesamte Länge glatt und absatzlos erstreckt. Dies bedeutet, daß sowohl die Geräuschentwicklung als auch der Verschleiß ohne zusätzliche Maßnahmen auf ein Minimum reduziert sind. Ein nachträgliches Bearbeiten ist in aller Regel unnötig, während gleichzeitig jeder Aufwand für Montage und Justierung des Umlenkstückes entfällt. Schließlich erlaubt es das neue Verfahren, auch höhere Fertigungstoleranzen bei der das Umlenkstück aufnehmenden Öffnung und deren Lage relativ zu den Schraubennuten der Mutter zuzulassen, weil etwaige Maßabweichungen beim Gießen des Umlenkstückes selbsttätig ausgeglichen werden.

Die eingangs genannte Kugelgewindespindel weist gemäß weiterer Erfindung die Merkmale des kennzeichnenden Teils des Patentanspruches 14 auf.

Weiterbildungen des neuen Verfahrens sind Gegenstand von Unteransprüchen.

In der Zeichnung ist ein Ausführungsbeispiel des Gegegenstandes der Erfindung dargestellt. Es zeigen:
- Fig. 1: eine Kugelgewindespindel gemäß der Erfindung, in perspektivischer Darstellung, mit teilweise aufgeschnittener Mutter,
- Fig. 2: die Mutter der Kugelgewindespindel nach Fig. 1, mit eingesetztem Formteil, zur veranschaulichung des Zustandes vor dem Eingießen des aushärtenden Materials, in einer Darstellung geschnitten längs der Linie II-II der Fig. 3,
- Fig. 3: die Anordnung nach Fig. 2, mit im axialen Querschnitt dargestellter Mutter, in einer Seitenansicht,
- Fig. 4: die Anordnung nach Fig. 3, in perspektivischer Darstellung, mit teilweise aufgeschnittener Mutter, und
- Fig. 5: die Mutter der Anordnung nach Fig. 2, geschnitten längs der Linie V-V der Fig. 2, in einer Draufsicht und in einem anderen Maßstab, unter Veranschaulichung der Innenseite des eingegossenen Umlenkstücks.

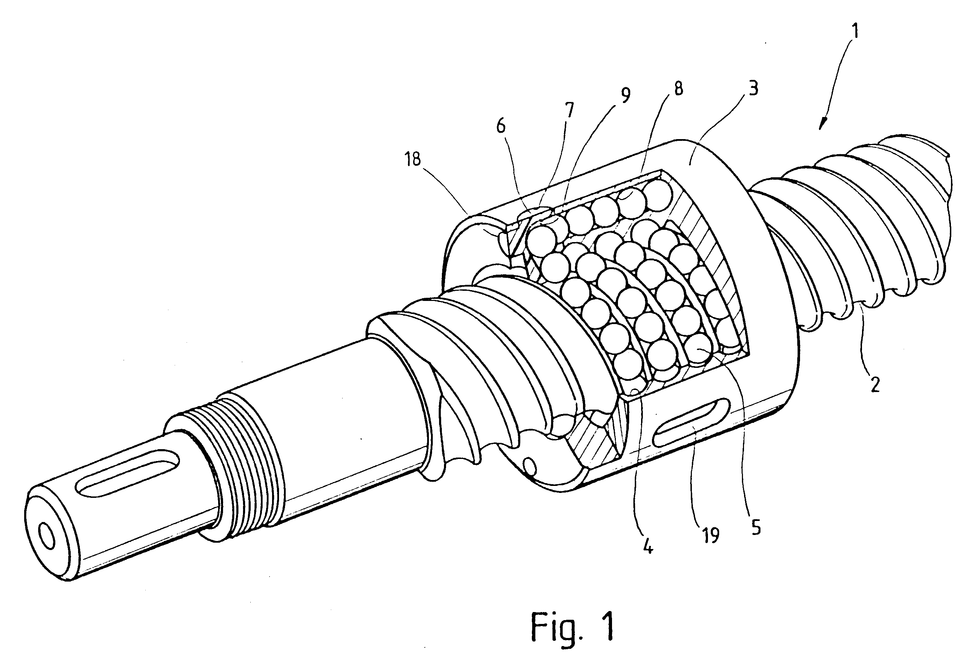

Die in Fig. 1 dargestellte Kugelgewindespindel weist eine Spindel 1 auf, die an ihrem Umfang ein Gewinde trägt, dessen Schraubengänge oder -nuten mit 2 bezeichnet sind. Auf die Spindel 1 ist eine diese umschließende zylindrische Mutter 3 aufgesetzt, die mit einem entsprechenden Innengewinde ausgebildet ist, dessen Schraubengänge oder -nuten mit 4 bezeichnet sind. Die im Querschnitt ähnlichen Schraubennuten 2 der Spindel 1 und 4 der Mutter 3 bilden die Laufbahnen für die Kugeln 5, über die die Mutter 3 in bekannter Weise reibungsarm auf der Spindel 1 gelagert ist.

In der Nähe der beiden Stirnseiten der Mutter 3 ist diese jeweils mit einer Kugelumlenkeinrichtung versehen, die die Kugeln 5 außerhalb der Schraubennuten 4 von dem einen Ende der Mutter 3 zu deren anderem Ende zurückführt.

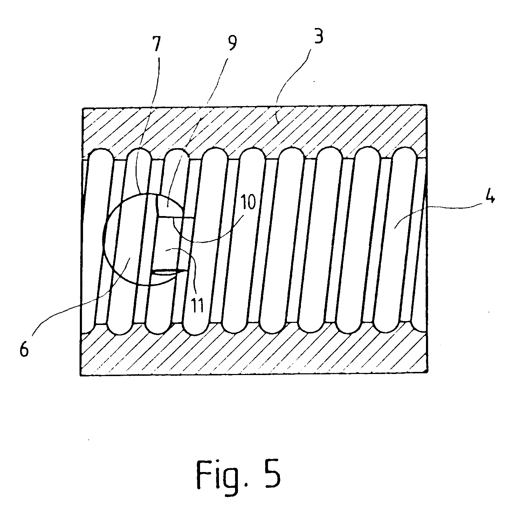

Diese Kugelumlenkeinrichtung weist zwei Kugelumlenkstücke 6 auf, von denen in den Fig. 1,5 jeweils lediglich eines dargestellt ist und die in entsprechende durchgehende Öffnungen 7 in Gestalt, zylindrischer Bohrungen in der Wandung der Mutter 3 eingefügt sind. Jedes der aus einem aushärtbaren Kunststoff oder einem Metall bzw. einer Metallegierung bestehenden Umlenkstücke 6 ist in die zugeordnete Öffnung 7 der Mutter 3 eingegossen, d.h. die Öffnung 7 wurde unter der an Ort und Stelle erfolgenden Ausbildung des Umlenkstückes mit einem der vorerwähnten Gießmaterialien vergossen, das dann zur Aushärtung gebracht wurde, wie dies im einzelnen noch erläutert werden wird.

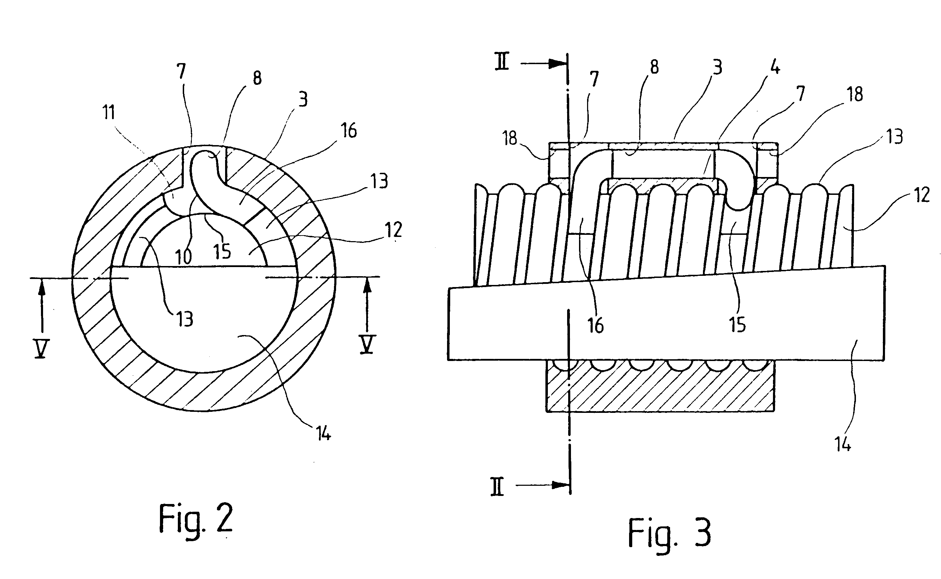

Die beiden Umlenkstücke 6 schließen sich an eine in der Wandung der Mutter 3 achsparallel ausgebildete Bohrung 8 an, die beidseitig in die Öffnungen 7 mündet und einen Teil eines Kugelumlenk- oder -rückführkanales bildet, dessen die Kugeln 5 um im wesentlichen 90° umlenkende Kanalteile 9 in den Umlenkstücken 6 ausgebildet sind. Diese Umlenkkanalteile 9 münden in die jeweils zugeordnete Schraubennut 4 der Mutter 3, wobei sie im Bereiche der Mündung einseitig durch eine in die Schraubennut 4 ragende Anlaufschulter 10 begrenzt sind, deren Anordnung und Verlauf insbesondere aus Fig. 2 und 5 zu entnehmen ist. Mit einem ripuenförmigen Teil 11 ragt die an dem Umlenkstück 6 jeweils angeformte Anlaufschulter 10 auf der der Mündung des Umlenkkanalteils 9 gegenüberliegenden Seite in die zugeordnete Schraubennut 2, so daß sich eine stabile Abstützung des zugeordneten Wandungsbereiches des Umlenkkanalteiles 9 ergibt.

Die Umlenkkanalteile 8,9 weisen jeweils eine im wesentlichen kreisrunde Querschnittsgestalt auf, die an den Durchmesser der Kugeln 5 angepaßt ist, derart, daß diese unbehindert den Umlenkkanal durchlaufen.

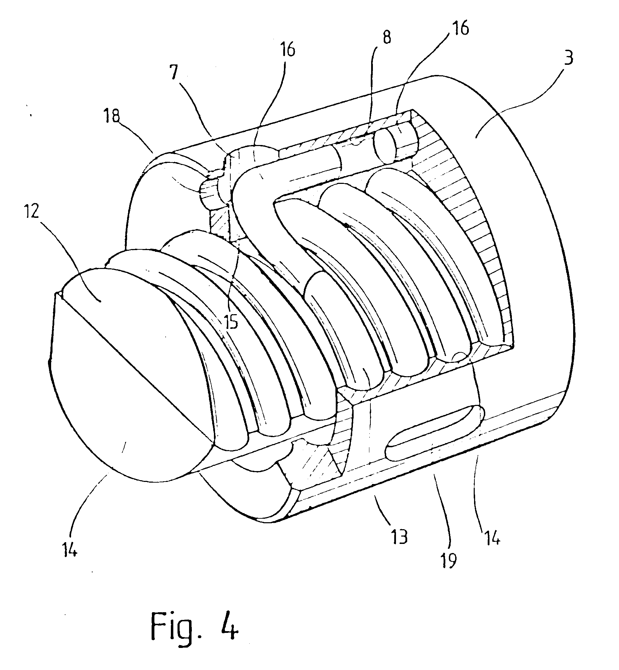

Das Eingießen der Umlenkstücke 6 in die Öffnungen 7 der Mutter 3 erfolgt in folgender Weise, wobei insbesondere auf die Fig. 2 bis 4 Bezug genommen wird:

In die Mutter 3 ist ein etwa über die Hälfte seines Umfanges einem Negativprofil der Mutter 3 entsprechendes Formteil 12 eingesetzt, dessen erhabene Schraubengänge 13 in die Schraubennuten 4 der Mutter 3 abgedichtet eingepaßt sind und das damit ein dem Gewindeprofil der Mutter 3 entsprechendes Gegenprofil trägt. Ein in Gestalt eines Keiles 14 ausgebildetes, im Querschnitt teilkreisförmiges Halterungsteil, das ebenfalls in die Mutter 3 eingesteckt ist, hält das Formteil 12 in Anlage an der Innenwandung der Mutter 3. Grundsätzlich wäre es natürlich auch denkbar, auf das Halterungsteil 14 zu verzichten und die Mutter 3 auf das endseitig abgestützte Formteil 12 aufzudrücken.

An dem Formteil 12 sind in den den Öffnungen 7 der Mutter 3 gegenüberliegenden Bereichen die beiden erhabenen Gewindegänge 13, wie bei 15 in Fig. 2,3 angedeutet, nutenartig ausgespart, wobei in diese im Querschnitt teilkreisförmigen Aussparungen ein zylindrischer Formkern 16 eingelegt ist, der in Fig. 3 lediglich für die linke Öffnung 7 eingezeichnet ist, während die rechte Öffnung 7 der Fig. 3 freigelassen ist. Der Formkern 16 besteht aus einem entsprechend abgeschnittenen Stück eines elastischen Kunststoff-O-Rings, wie er für Dichtungszwecke gebräuchlich ist. Dieses im Querschnitt kreisrunde Stück, dessen Durchmesser dem Durchmesser des Umlenkkanals 8,9 entspricht, ist einenends bei 15 an dem Formteil 12,den entsprechenden Gewindegang 13 fortsetzend befestigt, und andernends in die Bohrung 8 der Mutter 3 eingesteckt, wobei es etwa L-förmig gebogen durch die Öffnung 7 verläuft.

Bei der so als Gußform vorbereiteten Mutter 3 werden nunmehr die beiden Öffnungen 7 mit dem fließfähigen, aushärtbaren Gießmaterial ausgegossen, womit die beiden Umlenkstücke 6 gebildet werden, deren Umriß - einschließlich des Verlaufs des Umlenkkanalteiles 9 - jeweils unmittelbar aus den Fig. 1,2 zu entnehmen ist. Bei diesem Ausgießvorgang werden gleichzeitig die von dem geraden Umlenkkanalteil bei 8 nach außen führenden, von der Herstellung der entsprechenden Bohrung herrührenden Bohrungsteile 18 (Fig. 3) mit ausgegossen, wodurch eine zusätzliche formschlüssige Verankerung der nach dem Aushärten des Gießmaterials sich ergebenden Formstücke 6 erreicht wird.

Nach dem Aushärten des Gießmaterials wird das Halterungsteil 14 herausgezogen, womit das Formteil 12 und die beiden Formkerne 16 entfernt werden können.

Da die beiden Formkerne 16 eine völlig glatte Oberflächenbeschaffenheit aufweisen und sie sich beim Einstecken in das Umlenkkanalteil bei 8 der Mutter 3 vor dem Vergießen wegen ihrer elastischen Eigenschaften von sich aus so einstellen, daß ihre neutrale Faser möglichst spannungsfrei verläuft, erhält auch der Umlenkkanal in seinen Teilen 9 automatisch eine für einen einwandfreien Kugellauf optimale Formgebung. Das fließfähige Gießmaterial füllt beim Gießvorgang alle Zwischenräume aus; es schmiegt sich eng an die Außenwand des Formkernes 16 an und stellt damit sicher, daß der Umlenkkanal völlig absatzlos verläuft. Gleichzeitig wird auch die Anlaufschulter 10 zusammen mit deren Rippe 11 in dem in die zugeordnete Schraubennut 2 der Spindel 1 eingreifenden Bereich einwandfrei ausgeformt, wie dies aus Fig. 2 ohne weiteres zu ersehen ist.

Anstelle des beschriebenen, aus einem Stück eines aufgeschnittenen O-Ringes bestehenden Formkerns 16 könnte auch ein vorgeformter Formkern aus einem anderen Material, bspw. Metall, Verwendung finden, wie es auch möglich wäre, den Formkern 16 aus Wachs etc. zu formen. Durch entsprechende Materialwahl kann auch erreicht werden, daß der Formkern 16 nach dem Aushärten des Gießmaterials aus den Formstücken 6 herausgeschmolzen oder herausgelöst werden kann.

Anstelle der zylindrischen Öffnungen 7 können naturgemäß auch andersgestaltete Öffnungen vorgesehen werden, wenn dies im Einzelfall zweckmäßig sein sollte. So können z.B. die Öffnungen 7 in Gestalt von Langlöchern ausgebildet sein, wie dies im Prinzip in Fig. 1 unten bei 19 angedeutet ist, wenn das Umlenkstück 6 den ganzen U-förmigen Umlenkkanal 9 enthält, der in zwei benachbarte Schraubennuten 4 mündet, derart, daß das gerade Umlenkkanalteil 8 der Fig. 3 entfällt. Grundsätzlich gilt,daß im Bereiche der ein Umlenkstück 6 aufnehmenden Öffnung in der Wandung der Mutter 3 auch Hinterschneidungen, Vorsprünge etc. vorgesehen werden können, um eine zusätzliche formschlüssige Verbindung zwischen dem Umlenkstück und der Mutter 3 zu erreichen.

Die Anlaufschulter 10 und deren zugeordnete Rippe 11 sind durch das Ausgießen entsprechender, an dem Formteil 12 vorgesehener Formhöhlungen (vergl. Fig. 2) unmittelbar an dem zugehörigen Umlenkstück 6 angeformt. In Einzelfällen wäre es auch vorstellbar, daß diese Elemente als getrennte, bspw. aus Metall bestehende Teile in die Umlenkstücke 6 eingegossen werden.

## Patentansprüche

1. Verfahren zur Herstellung einer Kugelumlenkungseinrichtung an der Mutter (3) einer Kugelgewindespindel, bei dem in der Wandung der Mutter wenigstens eine zu deren Innenseite führende Öffnung (7) hergestellt und in diese ein Umlenkstück (6) eingefügt wird, das einen Umlenkkanal zur Rückführung von in Schraubennuten (2) der Spindel (1) und der Mutter (3) laufenden Kugeln (5) begrenzt, der in zumindest einer Schraubennut (4) der Mutter mündet und dort einseitig durch eine in diese Schraubennut ragende Anlaufschulter (10) für die Kugeln begrenzt ist, wobei in die Mutter ein zumindest in Bereich der Öffnung (7) ein in wesentlichen mit dem Gewindeprofil der Mutter korrespondierendes Gegenprofil aufweisendes Formteil (12) und ein der Formgebung des Umlenkkanals entsprechend gestalteter Formkern (16) eingesetzt werden, sodann die Öffnung unter Ausbildung des Umlenkstückes mit einem fließfähigen aushärtbaren Material ausgegossen und nach dem Aushärten des Materials das Formteil und der Formkern wieder entfernt werden, dadurch gekennzeichnet, daß ein von dem Formteil (12) getrennter vorgeformter Formkern (16) verwendet wird, der sich den erhabenen Gewindegang (13) des Gegenprofils fortsetzend an das Formteil (12) anschließt und der nach dem Aushärten des Materials und dem Abnehmen des Formteils (12) für sich entfernt wird.

2. Verfahren nach Anspruch 1, dadurch gekennzeichnet, daß das Formteil (12) einer der Anlaufschulter (10) entsprechende Formhöhlung aufweist (Fig. 2).

3. Verfahren nach Anspruch 1 oder 2 dadurch gekennzeichnet, daß als aushärtbares Material ein Kunststoff verwendet wird.

4. Verfahren nach Anspruch 1 oder 2, dadurch gekennzeichnet, daß als aushärtbares Material ein Metall oder eine Metallegierung verwendet wird.

5. Verfahren nach Anspruch 3, dadurch gekennzeichnet, daß der Formkern (16) aus einem aus dem ausgehärteten Umlenkstück (6) herausschmelz- oder -lösbaren Material besteht.

6. Verfahren nach einem der vorhergehenden Ansprüche, dadurch gekennzeichnet, daß der Formkern (16) aus einem elastisch biegsamen Material besteht.

7. Verfahren nach Anspruch 6, dadurch gekennzeichnet, daß der Formkern (16) beim Einfügen in die Mutter (3) in eine der Gestalt des Umlenkkanals entsprechende Form gebogen wird.

8. Verfahren nach einem der vorhergehenden Ansprüche, dadurch gekennzeichnet, daß die Mutter (3) im Bereiche der Öffnung (7) mit formschlüssigen Halterungsmitteln (18) für das Umlenkstück (6) ausgebildet wird.

9. Verfahren nach einem der vorhergehenden Ansprüche, dadurch gekennzeichnet, daß der Umlenkkanal über seine ganze Länge innerhalb eines Formstücks (6) liegend ausgebildet wird.

10. Verfahren nach einem der Ansprüche 1 bis 8, dadurch gekennzeichnet, daß in der Mutter (3) wenigstens zwei Öffnungen (7) und ein diese verbindendes Umlenkkanalteil (8) ausgebildet werden, in das von den Öffnungen (7) ausgehend wenigstens ein Formkern (16) eingefügt wird.

11. Verfahren nach Anspruch 10, dadurch gekennzeichnet, daß das Umlenkkanalteil (8) als Längsbohrung in der Wandung der Mutter (3) ausgebildet wird.

12. Verfahren nach einem der vorhergehenden Ansprüche, dadurch gekennzeichnet, daß ein zumindest zweiteiliges Formteil (12) verwendet wird.

13. Verfahren nach einem der vorhergehenden Ansprüche, dadurch gekennzeichnet, daß das Umlenkstück (6) nach dem Aushärten unbearbeitet belassen wird.

14. Kugelgewindespindel mit einer Spindel (1) und einer auf dieser mittels Kugeln (5) gelagerten Mutter (3), in deren Wandung wenigstens eine zu deren Innenseite führende Öffnung (7) ausgebildet ist, in welche ein einen Umlenkkanal zur Rückführung von in Schraubennuten (2) der Spindel (1) und der Mutter laufenden Kugeln begrenzendes Umlenkstück (6) angeordnet ist, dessen in wenigstens eine Schraubennut (4) der Mutter mündenden Umlenkkanal eine in diese Schraubennut ragende Anlaufschulter (10) für die Kugeln zugeordnet ist, wobei die Öffnung (7) der Mutter (3) unter Ausbildung eines eingegossenen Umlenkstückes (7) mit einem aushärtenden Material vergossen ist, dadurch gekennzeichnet, daß die Mutter (3) wenigstens zwei Öffnungen (7) und ein diese verbindendes erstes Umlenkkanalteil (8) aufweist, daß beide Öffnungen (7) je ein eingegossenes Umlenkstück mit jeweils einem zweiten Umlenkkanalteil (9) enthalten und daß die Umlenkkanalteile (8,9) sich jeweils absatzlos aneinander anschließend ausgebildet sind.

## Claims

1. Process for the manufacture of a ball deflection means at the nut (3) of a ball threaded spindle, in which in the walls of the nut at least one opening (7) leading to its inside is created and a deflection part (6) inserted therein, which defines a deflection channel for the return of balls (5) running in helical grooves (2) in the spindle (1) and the nuts (3), said deflection channel feeding into at least one helical groove (4) in the nut and being defined there on one side by an abutment shoulder (10) for the balls projecting into this helical groove, wherein a mould part (12), which at least in the area of the opening (7) has a counter-profile corresponding essentially to the thread profile of the nut, and a mould core (16) corresponding in structure to the shape of the deflection channel are inserted into the nut, the opening is then filled with a flowable, age-hardening material forming the deflection part, and after the material has age-hardened, the mould part and mould core are removed again, characterised in that a premoulded mould core (16) separate from the mould part (12) is used, which adjoins the mould part (12) as a continuation of the raised thread turns (13) of the thread of the counter-profile, and which is removed by itself after the material has age-hardened and the mould part (12) has been removed.

2. Process according to Claim 1, characterised in that the mould part (12) has a mould cavity corresponding to one of the abutment shoulders (10) (Figure 2).

3. Process according to claim 1 or 2, characterised in that a plastic is used as the age-hardening material.

4. Process according to Claim 1 or 2, characterised in that a metal or metal alloy is used as the age-hardening material.

5. Process according to Claim 3, characterised in that the mould core (16) is made of a material which may be melted or detached from the age-hardened deflection part (6).

6. Process according to one of the preceding claims, characterised in that the mould core (16) is made of an elastically flexible material.

7. Process according to Claim 6, characterized in that the mould core (16) is bent when inserted into the nut (3) into a shape corresponding to the structure of the deflection channel.

8. Process according to one of the preceding claims, characterised in that the nut (3) is provided in the area of the opening (7) with form-locking holding means (18) for the deflection part (6).

9. Process according to one or the preceding claims, characterised in that the deflection channel is formed to lie inside a moulded section (6) over its entire length.

10. Process according to one of Claims 1 to 8, characterised in that at least two openings (7) and a deflection channel portion (8) connecting these are provided in the nut (3), into said deflection channel portion (8) at least one mould care (16) extending from the openings (7) is inserted.

11. Process according to Claim 10, characterised in that the deflection channel portion (8) is provided in the form of a longitudinal hole in the walls of the nut (3).

12. Process according to one of the preceding claims, characterised in that an at least two-section mould part (12) is used.

13. Process according to one of the preceding claims, characterised in that the deflection part (6) is left unmachined after age-hardening.

14. Ball threaded spindle with a spindle (1) and a nut (3) mounted on this by means of balls (5), in the walls of which at least one opening (7) is directed towards its inside, in which a deflection part (6) is arranged, which defines a deflection channel for return of balls running in helical grooves (2) in the spindle (1) and the nut, wherein the deflection channel feeding into at least one helical groove (4) of the nut is provided with an abutment shoulder (10) projecting into this helical groove for the balls, and the opening (7) in the nut (3) is cast with an age-hardening material forming an integrally cast deflection part (7), characterised in that the nut (3) has at least two openings (7) and a first deflection channel portion (8) connecting these, that the two openings (7) each contain a deflection part integrally cast therein each with a second deflection channel portion (9), and that the deflection channel portions (8, 9) are provided to join flush onto one another.

## Revendications

1. Procédé de fabrication d'un dispositif de déviation des billes sur l'écrou (3) d'un système vis-écrou à billes, suivant lequel on ménage dans la paroi de l'écrou au moins une ouverture (7) menant vers le côté intérieur de l'écrou et à disposer dans cette ouverture une pièce de déviation (6) qui délimite un canal de déviation pour le renvoi de billes (5) roulant dans des gorges hélicoïdales (2) de la vis (1) et de l'écrou (3), ce canal débouchant dans au moins une gorge hélicoïdale (4) de l'écrou et étant délimité ici unilatéralement par un épaulement de butée (10) pour les billes, pénétrant dans cette gorge hélicoïdale, on insère dans l'écrou une partie de moule (12) présentant au moins dans la zone de l'ouverture (7) un contre-profil correspondant sensiblement au profil de filet de l'écrou, et un noyau de moule (16) conformé en fonction de la configuration du canal de déviation, on remplit ensuite l'ouverture, pour former la pièce de déviation, par coulée à l'aide d'un matériau coulable durcissable, et on enlève de nouveau la partie de moule et le noyau de moule après durcissement du matériau, caractérisé par le fait qu'on utilise un noyau de moule (16) préformé, qui est séparé de la partie de moule (12), qui se raccorde à la partie de moule (12) en prolongeant le filet (13) en relief du contre-profil et qui, après durcissement du matériau et enlèvement de la partie de moule (12), est enlevé séparément.

2. Procédé suivant la revendication 1, caractérisé par le fait que la partie de moule (12) présente une cavité de moule correspondant à l'épaulement de butée (12) (figure 2).

3. Procédé suivant la revendication 1 ou 2, caractérisé par le fait qu'on utilise une matière plastique comme matériau durcissable.

4. Procédé suivant la revendication 1 ou 2, caractérisé par le fait qu'on utilise un métal ou un alliage de métaux comme matériau durcissable.

5. Procédé suivant la revendication 3, caractérisé par le fait que le noyau de moule (16) est constitué par un matériau pouvant être enlevé de la pièce de déviation (6) durcie par fusion ou dissolution.

6. Procédé suivant l'une des revendications précédentes, caractérisé par le fait que le noyau de moule (16) est constitué par un matériau élastiquement flexible.

7. Procédé suivant la revendication 6, caractérisé par le fait qu'on courbe le noyau de moule (16) sous une forme correspondant à la configuration du canal de déviation, lors de l'insertion dans l'écrou (3).

8. Procédé suivant l'une des revendications précédentes, caractérisé par le fait qu'on réalise l'écrou (3), dans la zone de l'ouverture (7), avec des moyens de maintien (18) par complémentarité de forme pour la pièce de déviation (6).

9. Procédé suivant l'une des revendications précédentes, caractérisé par le fait qu'on réalise le canal de déviation de manière qu'il soit situé sur toute sa longueur à l'intérieur de la pièce de déviation (6).

10. Procédé suivant l'une des revendications 1 à 8, caractérisé par le fait qu'on ménage dans l'écrou (3) au moins deux ouvertures (7) et une partie de canal de déviation (8) qui relie ces ouvertures entre elles et dans laquelle est inséré au moins un noyau de moule (16) depuis les ouvertures (7).

11. Procédé suivant la revendication 10, caractérisé par le fait qu'on réalise la partie de canal de déviation (8) sous forme de trou longitudinal dans la paroi de l'écrou (3).

12. Procédé suivant l'une des revendications précédentes, caractérisé par le fait qu'on utilise une partie de moule (12) au moins en deux parties.

13. Procédé suivant l'une des revendications précédentes, caractérisé par le fait qu'on laisse la pièce de déviation (6) non usinée après le durcissement.

14. Système vis-écrou à billes comprenant une vis (1) et un écrou (3) monté à l'aide de billes (5) sur la vis, écrou dans la paroi duquel est formée au moins une ouverture (7) qui mène vers le côté intérieur de cette paroi et dans laquelle est disposée une pièce de déviation (6) qui délimite un canal de déviation pour le renvoi de billes roulant dans des gorges hélicoïdales (2) de la vis (1) et de l'écrou, canal de déviation qui débouche dans au moins une gorge hélicoïdale (4) de l'écrou, et auquel est associé un épaulement de butée (10) pour les billes, pénétrant dans cette gorge hélicoïdale, l'ouverture (7) de l'écrou (3) étant remplie par un matériau durcissable avec formation d'une pièce de déviation (6) moulée in situ, caractérisé par le fait que l'écrou (3) présente au moins deux ouvertures (7) et une première partie de canal de déviation (8) reliant ces ouvertures entre elles, que les deux ouvertures (7) renferment chacune une pièce de déviation moulée in situ, ayant une deuxième partie de canal de déviation (9), et que les parties de canal de déviation (8, 9) sont réalisées de manière à se raccorder entre elles sans gradin.
